# EUROPEAN PATENT SPECIFICATION

(11) **EP 2 722 705 B1**
(45) Date of publication and mention of the grant of the patent: **18.05.2016**
(21) Application number: 13004999.2
(22) Date of filing: 18.10.2013
(51) Int. Cl.: G02B 27/14

(54) **Optical assembly and laser alignment apparatus**
Optische Anordnung und Laserausrichtungs-Vorrichtung
Ensemble optique et appareil d'alignement de laser

(30) Priority: 19.10.2012 US 201261716008 P; 11.03.2013 US 201313792375; 11.10.2013 US 201314052056
(43) Date of publication of application: 23.04.2014
(73) Proprietor: HAMAR LASER INSTRUMENTS, Inc., Danbury, CT 06810 (US)
(72) Inventor: HAMAR, Martin R., Wilton, Connecticut 06897 (US)
(74) Representative: Müller-Boré & Partner Patentanwälte PartG mbB

(56) References cited:
- CN-U- 201 876 603
- US-A- 3 531 186
- PROTEEP C. V. MALLIK: "Measurement of a 2-meter flat using a pentaprism scanning system", OPTICAL ENGINEERING, vol. 46, no. 2, 20 February 2007 (2007-02-20), page 023602, XP055092691, ISSN: 0091-3286, DOI: 10.1117/1.2700386

## Description

### BACKGROUND OF THE INVENTION

1. Field of the Invention. The invention relates to an optical apparatus or assembly that can be used with a laser emitter and a photosensitive target for aligning objects relative to one another.

2. Description of the Related Art. Laser emitters and photosensitive targets are used widely for aligning objects to one another. The prior art laser alignment system includes at least one laser emitter that projects a straight beam and at least one photosensitive target that can precisely determine the center of energy of the laser beam impinging thereon. The laser emitter and the photosensitive target can be mounted in a fixed relationship to objects that are to be aligned. The relative positions of the objects and the alignments of the objects relative to one another can be measured and adjusted based on the measurements obtained with the laser alignment system.

Pentaprisms are used in many laser alignment systems. More particularly, a laser beam that is directed toward one face of the pentaprism undergoes two reflections within the pentaprism and then exits the pentaprism at a right angle to the input beam. Some pentaprisms are referred to as see-through pentaprisms and function as beam splitters. Thus, a first part of the input beam will pass substantially linearly through the pentaprism to produce a first output beam that is substantially aligned with the input beam. However, a second part of the input beam will be reflected twice within the see-through or beam splitting pentaprism to produce a second output beam that is perpendicular to the first output beam. Thus, a single see-through or beam splitting pentaprism can be used in a laser alignment system to define two perpendicular axes, namely an x-axis and a y-axis, and photosensitive targets can be used to determine the position and alignment of objects relative to the ease to axes.

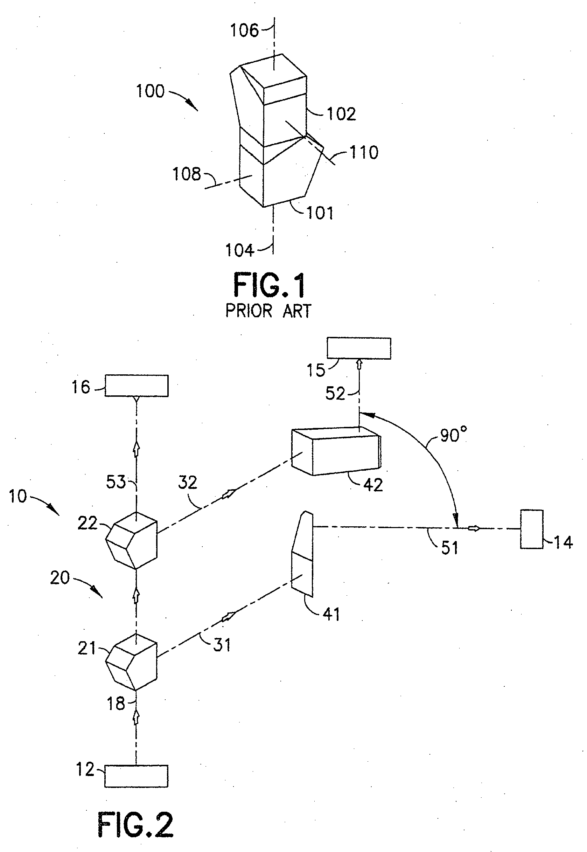

Some laser alignment systems use two beam splitting pentaprisms as shown, for example, in FIG. 1. In this regard, the optical system 100 of FIG. 1 has first and second pentaprisms 101 and 102 in fixed relationship to one another. An input beam 104 will impinge upon a first face of the first pentaprism 101 and will continue substantially linearly through the first and second pentaprisms 101 and 102 to produce a first output beam 106 that is aligned with the input beam 104. Part of the input beam 104 will be reflected within the first pentaprism 101 and will produce a second output beam 108 that is perpendicular to both the input beam 104 and the first output beam 106. Part of the input beam 104 that enters the second pentaprism 102 will be reflected with in the second pentaprism 102 and will produce a third output beam 110 that is perpendicular to the first and second output beams 106 and 108. As a result, three mutually perpendicular output beams 106, 108 and 110 will be emitted from the optical assembly 100 comprised of the first and second pentaprisms 101 and 102. The three mutually perpendicular output beams 106, 108 and 110 can be used to align objects relative to three mutually perpendicular axes, namely the-axis, the y-axis and the z-axis.

Some laser alignment systems rotate one or more pentaprisms about the axis of the input beam. As a result, the reflected output beam will sweep a plane that is perpendicular to the input beam. Photosensitive targets then can be used to measure the relative position and alignment of objects relative to the plane that is swept by the rotating pentaprism. Two rotating pentaprisms can sweep two mutually perpendicular planes while three rotating pentaprisms can sweep three mutually perpendicular planes. With reference to FIG. 1, three rotating pentaprisms can be disposed to receive the three output beams 106, 108 and 110 and can use at least these parts of those three output beams to sweep three mutually perpendicular planes. A beam splitting rotating pentaprism can sweep a plane and produce an output beam that is perpendicular to the plane. Examples of laser alignment systems that use the optical arrangements described above are disclosed in patents to the inventor of this application, including: US 4,468,119, US 4,714,344, US 4,844,618, US 5,224,052, US 5,302,833, US 5,307,368, US 5,576,826, US 5,929,984, US 6,038,050, US 6,292,303, US 6,704,115, US 6,825,923 and US 7,708,204.

Pentaprisms can be made with high precision so that the output beam is very nearly perfectly perpendicular to the input beam. Additionally, two beam splitting pentaprisms can be assembled together, as shown in FIG. 1, so that all three output beams are very nearly perfectly perpendicular. Imprecision in either the manufacture of a single pentaprism or the assembly of two pentaprisms generally can be measured and compensated for in the laser alignment system, if necessary.

Pentaprisms and other optical components of a laser alignment system must be mounted in the hardware of the system. The mounting mechanisms are subject to tilting movement relative to the input beam due to temperature related differential expansion and/or vibration. Machines or vehicles operating near a laser alignment can cause a noticeable shift in the position of the laser beam impinging upon the photosensitive target. The relative position of objects often can be assessed accurately if the output laser beams or the laser planes shift in unison in response to a tilting movement of the optical components of the system. However, tilting movement of the optical assembly 100 of FIG. 1 relative to the input beam 104 will cause the second and third output beams 108 and 110 to shift relative to one another and relative to the first output beam 106 out of their mutually perpendicular alignment. These movements of the second and third output beams 108 and 110 are independent of one another and unrelated. The uncorrelated movements of the second and third output beams 108 and 110 relative to one another and relative to the first output beam 106 can significantly affect the accuracy and repeatability of the laser alignment system that employs the optical assembly 100 of FIG. 1.

"Measurement of a 2-meter flat using a pentaprism scanning system" by Mallik, C. V. Proteep et al. published in Optical Engineering vol. 46, no. 2 on February 20, 2007 relates to a scanning pentaprism system ideal for use as an absolute and precise test for an optical flat. The system uses light from an autocollimator that is reflected from two pentaprisms to project reference beams of light onto a flat mirror.

Accordingly, it is an object of the subject invention to provide an optical assembly that can produce mutually perpendicular output beams that are stable relative to one another even though the optical assembly may tilt relative to the input beam.

### SUMMARY OF THE INVENTION

The invention relates to a laser alignment system with an optical assembly that includes first and second 90° pentaprisms oriented for respectively producing first and second reflected beams that are parallel to one another, rather than perpendicular to one another as in the above-described prior art optical system. The first and second 90° pentaprisms of the optical assembly are disposed in fixed relationship to one another. With this arrangement, the first and second reflected beams will remain parallel to one another even if the optical assembly tilts relative to the input beam.

The optical assembly further includes first and second beam diverters disposed in fixed relationship to the first and second 90° pentaprisms and disposed to receive the first and second reflected beams respectively. The first and second beam diverters preferably are configured to divert the first and second reflected beams through angles of 45° to produce first and second output beams that are perpendicular to one another and perpendicular to the input beam.

The first and second 90° pentaprisms preferably are see-through or beam splitting pentaprisms so that part of the input beam to the first 90° pentaprism continues through the first 90° pentaprism and is the input beam to the second 90° pentaprism. This input beam will continue through the second 90° pentaprism to produce a third output beam that is perpendicular to the first and second reflected beams produced by the first and second 90° pentaprisms and also perpendicular to the first and second output beams produced by the first and second beam diverters.

The first and second beam diverters may be half pentaprisms or 45° pentaprisms configured to reflect an input beam through a 45° angle. However, other optical components can be used, including arrangements of lenses, mirrors, diffracting prisms or the like.

Significantly, the first and second output beams will retain their perpendicularity with respect to one another and with respect to the input beam even if the optical assembly tilts relative to the input beam. Thus, the optical assembly can be used in a laser alignment system and will ensure that photosensitive targets can accurately determine positions and alignments relative to three mutually perpendicular axes and/or three mutually perpendicular planes even if the optical assembly tilts relative to the input beam due to changes in temperature or vibration.

### BRIEF DESCRIPTION OF THE DRAWINGS

FIG. 1 is a schematic perspective view of a prior art optical assembly that can be used in a prior art laser alignment system.
FIG. 2 is an exploded schematic perspective view of an optical assembly in accordance with the invention and used as part of a laser alignment system.
FIG. 3 is a top plan view of the optical assembly of FIG. 2.
FIG. 4 is a side elevational view of the optical assembly of FIGS. 2 and 3.
FIG. 5 is a front elevational view of the optical assembly shown in FIGS. 2-4.
FIG. 6 is a top plan view of a portion of the optical assembly with a second embodiment of a beam diverter.
FIG. 7 is a side elevational view similar to FIG. 4, but showing an alternate embodiment of the optical assembly.

### DETAILED DESCRIPTION OF THE PREFERRED EMBODIMENTS

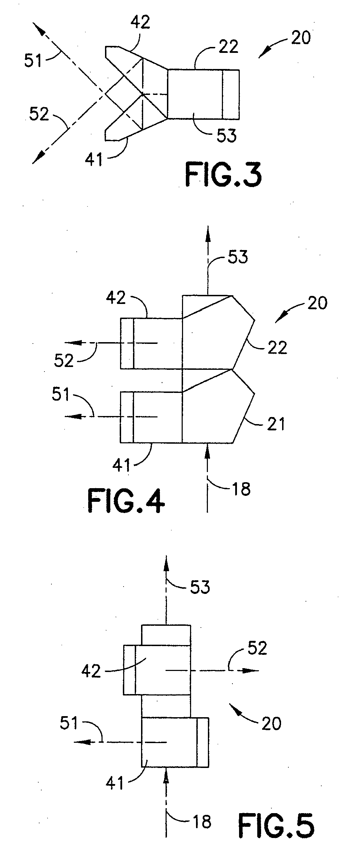

A laser alignment system in accordance with the invention is identified generally by the numeral 10 in FIGS. 2-5. The laser alignment system 10 includes a laser emitter 12 and first, second and third photosensitive target assemblies 14, 15 and 16. The laser emitter 12 and the photosensitive target assemblies 14-16 may be of known design. More particularly, the photosensitive target assemblies 14-16 may be configured to measure displacement relative to two mutually perpendicular axes and may be configured to measure alignment about mutually perpendicular axes (pitch and yaw). The laser emitter 12 is operative to produce an input beam 18.

The laser alignment system 10 further includes an optical assembly 20. The optical assembly 20 is disposed to receive the input beam 18 from the laser emitter 12. More particularly, the optical assembly 20 includes first and second see-through or beam splitting 90° pentaprisms 21 and 22. The first and second 90° pentaprisms 21 and 22 are disposed in fixed relationship to one another and are oriented to produce first and second reflected beams 31 and 32 respectively. The first and second reflected beams 31 and 32 are parallel to one another and perpendicular to the input beam 22.

The optical assembly 20 further includes first and second 45° pentaprisms 41 and 42 disposed in fixed relationship to the first and second 90° pentaprisms 21 and 22. Additionally, the first and second 45° pentaprisms are disposed to receive the first and second reflected beams 31 and 32 from the first and second 90° pentaprisms 21 and 22 and to reflect those beams through 45°. The first and second 45° pentaprisms 41 and 42 are oriented to produce first and second output beams 51 and 52 that are perpendicular to one another and perpendicular to the input beam 18.

As noted above, the first and second 90° pentaprisms 21 and 22 are see-through or beam splitting pentaprisms that are configured to permit a part of the input beam 18 to continue through the first and second 90° pentaprisms 21 and 22 to produce a third output beam 53 that is substantially colinear with the input beam 18 and perpendicular to the first and second output beams 51 and 52.

Significantly, the optical assembly 20 will retain the mutually perpendicular relationship of the first, second and third output beams 51, 52 and 53 even if the optical assembly undergoes a pitch or yaw tilting movement relative to the input beam 18 due to temperature-related dimensional changes of the mounting hardware or due to vibrations in proximity to the optical assembly 20. As a result, the photosensitive targets 14, 15 and 16 will produce reliable and repeatable displacement and alignment data with respect to the three mutually perpendicular axes even if the optical assembly tilts relative to the input beam 18.

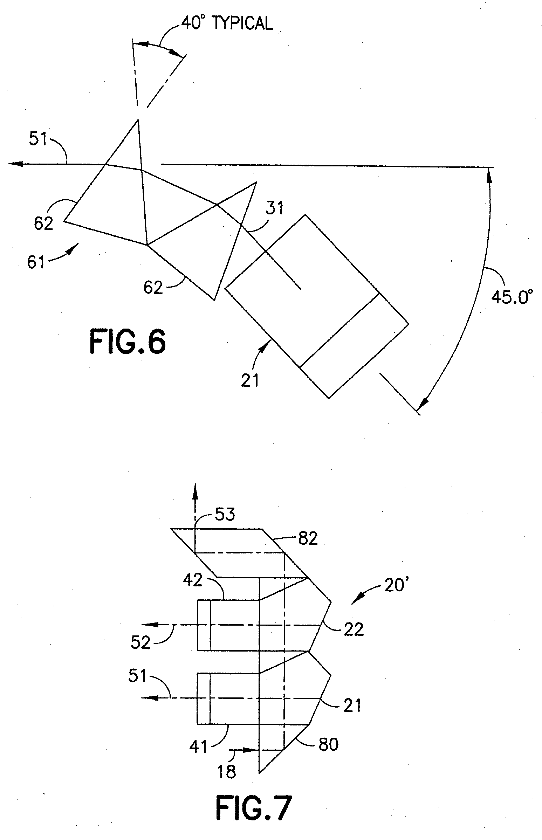

FIGS. 1-5 illustrate an embodiment of the invention with first and second beam splitting 90° pentaprisms 21 and 22 oriented to produce first and second reflected beams 31 and 32 that are parallel to one another and perpendicular to the input beam 22 along with first and second 45° pentaprisms 41 and 42 oriented to produce first and second output beams 51 and 52 that are perpendicular to one another and perpendicular to the input beam 18. However, other optical means can be used with the first and second beam splitting 90° pentaprisms 21 and 22 for diverting the first and second reflected beams 31 and 32 through 45° angles to produce first and second output beams 51 and 52 that are perpendicular to one another and perpendicular to the input beam 18. For example, FIG. 6 shows the first beam splitting 90° pentaprism 21 used with a second embodiment of a beam diverter means 61 for diverting the first reflected beam 31 through an angle of 45° to produce the first output beam 51. The beam diverter means 61 of FIG. 6 comprises two diffracting prisms 62 and 63. A slight rotation of either diffracting prisms 62 or 63 about an axis perpendicular to the plane of FIG. 6 can be carried out during manufacture and assembly of the apparatus to tune the deviation angle. A virtually identical, but reversed, arrangement of diffracting prisms can be used as a second beam diverter means in combination with the second beam splitting 90° pentaprism 22 for diverting the second reflected beam 32 through a 45° angle to produce second output beam 52 that is perpendicular to the first output beam 51 and perpendicular to the input beam 18. This second embodiment also will retain the mutually perpendicular relationship of the first, second and third output beams 51, 52 and 53 even if the optical assembly undergoes a pitch or yaw tilting movement relative to the input beam 18 due to temperature-related dimensional changes of the mounting hardware or due to vibrations in proximity to the optical assembly 20.

FIG. 7 illustrates an alternate optical assembly 20' for use with the laser alignment system 10. The optical assembly 20' differs from the optical assembly 20 by incorporating a right angle prism 80 before the first 90° pentaprism 21 and in a position to receive the input beam 18 from the laser emitter 12. Thus, the input beam 18 is rotated through 90° by the right angle prism 80 before entering the first 90° pentaprism 21. The first and second 90° pentaprisms 21 and 22 and the first and second 45° pentaprisms 41 and 42 are identical to those described above with respect to the first embodiment, are assmbled in the same orientations and positions and the reflections that occur therein are identical to those described above with respect to the first embodiment. The alternate optical assembly 20' also differs from the first embodiment by the inclusion of an output prism 82 to receve the third output beam 53 that emanates from the second 90° pentaprism 22. The output prism 82 is configured to generate two 90° reflections so that the third output beam from the output prism 82 is parallel to, but offset from, the output beam exiting the second 90° pentaprism 22. The alternate optical assembly 20' has been found to be particularly effective in response to pitch and roll movements of the optical assembly 20' and ensures that all three output beam 51, 52 and 53 move together in response to pitch and roll movements and retain their mutual perpendicularity.

The invention has been described with respect to certain preferred embodiments. However, it will be apparent that various changes can be made without departing from the scope of the invention as defined by the appended claims. In this regard, three embodiments of beam diverter means are described and illustrated for reflecting the beams emitted from the 90° pentaprisms to produce the first and second output beams. However, other optical components can be employed for reflecting the beams through 45° angles to produce the mutually perpendicular first and second output beams. Additionally, the exploded perspective view of FIG. 2 illustrates the laser emitter 12 and the optical assembly 20 as being spaced from one another. In the typical embodiment, the laser emitter 12 and the optical assembly 20 will be incorporated into a single housing.

The illustrated embodiments show three photosensitive targets 14, 15 and 16. However, more or fewer photosensitive targets can be employed.

The illustrated embodiments show the output beams 51, 52 and 53 impinging directly on the photosensitive targets 14, 15 and 16. However, the laser alignment system also can include rotating pentaprisms so that the laser alignment system produces three mutually perpendicular planes. The rotating pentaprisms can be see-through or beam splitting pentaprisms so that the laser alignment system produces three mutually perpendicular planes and three mutually perpendicular axes.

## Claims

1. An optical assembly (20) for a laser alignment apparatus, comprising:
first and second 90° pentaprisms (21, 22) disposed and oriented to reflect an input beam (18) 90° to produce first and second reflected beams (31, 32) that are parallel to one another, wherein at least the first pentaprism (21) is a beam splitting pentaprism; **characterized in further comprising**
first and second beam diverters (41, 42) disposed and oriented to divert the first and second reflected beams (31, 32) respectively 45° to produce first and second output beams (51, 52) that are mutually perpendicular.

2. The optical assembly (20) of claim 1, further comprising a right angle prism (80) disposed before the first and second 90° pentaprisms (21, 22) to reflect the input beam (18) 90° before entering the first 90° pentaprism (21).

3. The optical assembly (20) of claim 1 or 2, wherein the first and second 90° pentaprisms (21, 22) are disposed in fixed relationship to one another.

4. The optical assembly (20) of any of claims 1 to 3, wherein the first and second beam diverters (41, 42) are first and second half pentaprisms.

5. The optical assembly (20) of any of claims 1-4, wherein the first and second beam diverters are connected fixedly to the first and second 90° pentaprisms.

6. The optical assembly (20) of any of claims 1-5, wherein the first and second 90° pentaprisms (21, 22) are beam splitting pentaprisms, and wherein a portion of the input beam (18) continues substantially linearly through the first and second 90° pentaprisms (21, 22) to produce a third output beam (53) substantially perpendicular to the first and second output beams (51, 52).

7. The optical assembly (20) of any of claims 1-6, further comprising an output prism (82) disposed for receiving the third output (53) beam from the second 90° pentaprism (22) and configured to generate two right angle reflections therein so that the third output beam (53) leaving the output prism (82) is parallel to and offset from the beam entering the output prism (82).

8. The optical assembly (20) of any of claims 1-3, wherein the first and second beam diverters (41, 42) comprise half pentaprisms, diffracting prisms, mirrors and/or lenses.

9. A laser alignment apparatus (10), comprising:
a laser emitter (12) for producing an input laser beam (18); and
an optical assembly (20) according to any of claims 1-8.

10. A laser alignment system (10), comprising:
a laser emitter (12) for producing an input laser beam (18);
an optical assembly (20) according to any of claims 1-8; and
at least first and second photosensitive targets (14, 15) disposed for a impingement by the first and second output beams (51, 52).

## Patentansprüche

1. Eine optische Anordnung (20) für eine Laserausrichtungs-Vorrichtung, die Folgendes umfasst:
ein erstes und ein zweites 90°-Pentaprisma (21, 22), die angeordnet und ausgerichtet sind, um einen Eingangsstrahl (18) um 90° zu reflektieren, um einen ersten und einen zweiten reflektierten Strahl (31, 32) zu erzeugen, die zueinander parallel sind, wobei zumindest das erste Pentaprisma (21) ein strahlaufspaltendes Pentaprisma ist;
**dadurch gekennzeichnet, dass sie des Weiteren Folgendes umfasst:**
einen ersten und einen zweiten Strahlumlenker (41, 42), die angeordnet und ausgerichtet sind, um den ersten und zweiten reflektierten Strahl (31, 32) um jeweils 45° umzulenken, um einen ersten und zweiten Ausgangsstrahl (51, 52) zu erzeugen, die zueinander rechtwinklig sind.

2. Die optische Anordnung (20) nach Anspruch 1, die des Weiteren ein rechtwinkliges Prisma (80) umfasst, das vor dem ersten und zweiten 90°-Pentaprisma (21, 22) angeordnet wird, um den Eingangsstrahl (18) um 90° zu reflektieren, bevor er in das erste 90°-Pentaprisma (21) eintritt.

3. Die optische Anordnung (20) nach Anspruch 1 oder 2, wobei das erste und das zweite 90°-Pentaprisma (21, 22) in fester Beziehung zueinander angeordnet werden.

4. Die optische Anordnung (20) nach einem der Ansprüche von 1 bis 3, wobei der erste und der zweite Strahlumlenker (41, 42) ein erstes und ein zweites halbes Pentaprisma sind.

5. Die optische Anordnung (20) nach irgendeinem der Ansprüche 1 - 4, wobei der erste und der zweite Strahlumlenker mit dem ersten und zweiten 90°-Pentaprisma fest verbunden sind.

6. Die optische Anordnung (20) nach irgendeinem der Ansprüche 1 - 5, wobei das erste und zweite 90°-Pentaprisma (21, 22) strahlaufspaltende Pentaprismen sind, und wobei ein Teil des Eingangsstrahls (18) durch das erste und zweite 90°-Pentaprisma (21, 22) im Wesentlichen linear durchgeht, um einen dritten Ausgangsstrahl (53) zu erzeugen, der zum ersten und zweiten Ausgangsstrahl (51, 52) im Wesentliche rechtwinklig ist.

7. Die optische Anordnung (20) nach irgendeinem der Ansprüche 1 - 6, die des Weiteren ein Ausgangsprisma (82) umfasst, das angeordnet ist, um den dritten Ausgangsstrahl (53) vom zweiten 90°-Pentaprisma (22) zu empfangen, und konfiguriert ist, um darin zwei rechtwinklige Reflexionen zu erzeugen, sodass der das Ausgangsprisma (82) verlassende dritte Ausgangsstrahl (53) zum in das Ausgangsprisma (82) eintretenden Strahl parallel und versetzt ist.

8. Die optische Anordnung (20) nach irgendeinem der Ansprüche 1 - 3, wobei der erste und der zweite Strahlumlenker (41, 42) halbe Pentaprismen, Licht beugende Prismen, Spiegel und/oder Linsen umfassen.

9. Eine Laserausrichtungs-Vorrichtung (10), die Folgendes umfasst:
einen Laserstrahler (12) zur Erzeugung eines Eingangs-Laserstrahls (18); und
eine optische Anordnung (20) nach irgendeinem der Ansprüche 1 - 8.

10. Ein Laserausrichtungs-System (10), das Folgendes umfasst:
einen Laserstrahler (12) zur Erzeugung eines Eingangs-Laserstrahls (18);
eine optische Anordnung (20) nach irgendeinem der Ansprüche 1 - 8; und
mindestens ein erstes und ein zweites fotoempfindliches *Target* (14, 15), die für ein Auftreffen des ersten und zweiten Ausgangsstrahls (51, 52) angeordnet sind.

## Revendications

1. Un ensemble optique (20) pour un dispositif d'alignement de laser, comprenant:
un premier et un deuxième pentaprisme à 90° (21, 22) disposés et orientés pour réfléchir un faisceau d'entrée (18) à 90° pour produire un premier et un deuxième faisceau réfléchi (31, 32) qui sont parallèles l'un par rapport à l'autre, sachant qu'au moins le premier pentaprisme (21) est un pentaprisme de division de faisceau ;
**caractérisé en ce qu'il comprend en outre**
un premier et un deuxième déflecteur de faisceau (41, 42) qui sont disposés et orientés pour dévier le premier et le deuxième faisceau réfléchi (31, 32) respectivement de 45° pour produire un premier et un deuxième faisceau de sortie (51, 52) qui sont mutuellement perpendiculaires.

2. L'ensemble optique (20) d'après la revendication 1, comprenant en outre un prisme à angle droit (80) disposé avant le premier et le deuxième pentaprisme à 90° (21, 22) pour réfléchir le faisceau d'entrée (18) de 90° avant qu'il entre dans le premier pentaprisme à 90° (21).

3. L'ensemble optique (20) d'après la revendication 1 ou 2, sachant que le premier et le deuxième pentaprisme à 90° (21, 22) sont disposés en position fixe l'un par rapport à l'autre.

4. L'ensemble optique (20) d'après une quelconque des revendications de 1 à 3, sachant que le premier et le deuxième déflecteur de faisceau (41, 42) est un premier et un deuxième demi-pentaprisme.

5. L'ensemble optique (20) d'après une quelconque des revendications 1-4, sachant que le premier et le deuxième déflecteur de faisceau sont raccordés de manière fixe au premier et au deuxième pentaprisme à 90°.

6. L'ensemble optique (20) d'après une quelconque des revendications 1-5, sachant que le premier et le deuxième pentaprisme à 90° (21, 22) sont des pentaprismes de division de faisceau, et sachant qu'une portion du faisceau d'entrée (18) poursuit sa voie essentiellement de manière linéaire à travers le premier et le deuxième pentaprisme à 90° (21, 22) pour produire un troisième faisceau de sortie (53) essentiellement perpendiculaire au premier et au deuxième faisceau de sortie (51,52).

7. L'ensemble optique (20) d'après une quelconque des revendications 1-6, comprenant en outre un prisme de sortie (82) disposé pour recevoir le troisième faisceau de sortie (53) de la part du deuxième pentaprisme à 90° (22) et configuré pour y générer deux réflexions à angle droit, de sorte que le troisième faisceau de sortie (53) quittant le prisme de sortie (82) est parallèle et décalé par rapport au faisceau entrant dans le prisme de sortie (82).

8. L'ensemble optique (20) d'après une quelconque des revendications 1-3, sachant que le premier et le deuxième déflecteur de faisceau (41, 42) comprennent des demi-pentaprismes, des prismes de diffraction, des miroirs et/ou des lentilles.

9. Un dispositif d'alignement de laser (10), comprenant :
un émetteur laser (12) pour produire un faisceau laser d'entrée (18) ; et
un ensemble optique (20) d'après une quelconque des revendications 1-8.

10. Un système d'alignement de laser (10), comprenant :
un émetteur laser (12) pour produire un faisceau laser d'entrée (18) ;
un ensemble optique (20) d'après une quelconque des revendications 1-8 ; et
au moins une premier et une deuxième cible photosensible (14, 15) disposées pour une incidence du premier et du deuxième faisceau de sortie (51, 52).
